# EUROPEAN PATENT SPECIFICATION

(11) **EP 2 787 423 B1**
(45) Date of publication and mention of the grant of the patent: **24.07.2019**
(21) Application number: 13764921.6
(22) Date of filing: 13.03.2013
(51) Int. Cl.: G06F 1/32, G06F 1/3231, G06F 1/3234, G06F 1/3246

(54) **STANDBY OPERATION CONTROL METHOD AND DEVICE**
BEREITSCHAFTSMODUSSTEUERUNGSVERFAHREN UND VORRICHTUNG
PROCÉDÉ ET DISPOSITIF DE COMMANDE D'OPÉRATION DE MISE EN VEILLE

(30) Priority: 22.03.2012 CN 201210079395
(43) Date of publication of application: 08.10.2014
(73) Proprietor: Huawei Device Co., Ltd., Dongguan, Guangdong 523808 (CN)
(72) Inventor: CHEN, Jianhua, Shenzhen Guangdong 518129 (CN)
(74) Representative: Thun, Clemens
(86) International application number: PCT/CN2013/072515
(87) International publication number: WO 2013/139220

(56) References cited:
- CN-A- 101 350 615
- CN-A- 101 458 557
- CN-A- 101 873 447
- CN-A- 102 074 173
- US-A1- 2003 051 181
- US-A1- 2009 160 541
- US-A1- 2010 079 508
- US-A1- 2012 050 152

## Description

### TECHNICAL FIELD

The present invention relates to the field of communications technologies, and in particular, to a method and an apparatus for controlling a standby operation.

### BACKGROUND

With the development of intelligent terminal technologies, the use of mobile terminals becomes increasingly wide, and a user may use a mobile terminal to watch a video and browse a webpage, among others. In the prior art, when a user browses a webpage by using a mobile terminal, if the user browses a page without triggering the mobile terminal for a long time, the mobile terminal automatically enters a standby state. At this moment, the user may intend to continue browsing without triggering the mobile terminal, and automatic standby that violates the intention of the user weakens user experience.

For example, US 2003/0051181 A1 refers to a personal computer that enters sleep mode to conserve electrical energy responsive to a proximity detector and a proximity timer. As long as a user is near the computer, as determined by the proximity detector, the computer is controlled by an activity timer, and enters sleep mode upon being idle for a predetermined period of time. When the proximity detector determines that the user has left the computer unattended, the proximity detector starts the proximity timer. When the proximity timer expires, the computer enters sleep mode. Because the proximity timer operates only when the user has left the computer unattended, the proximity timer may be set to expire earlier than the activity timer. Consequently, the computer may enter sleep mode earlier than would otherwise be possible, and thereby consumes less energy

US 2012/0050152 A1 discloses a method, apparatus and computer program product for operating a display including providing for operation of a display in a first mode, providing for operation of the display in a second mode, and transitioning from operating the display in the first mode to operating the display in the second mode in response to an amount of time elapsing without detecting a user input. The amount of time may be variable in response to at least one of: the information presented on the display in the first mode; the application presenting the information on the display in the first mode, a sensor input of a device comprising the display; or whether or not a user input is detected within a predetermined response time after transitioning from operating the display in the first mode to operating the display in the second mode.

### SUMMARY

To enter a standby state without violating an intention of a user, embodiments of the present invention provide a method and an apparatus for controlling a standby operation. The technical solutions are as follows:
In a first aspect a method for controlling a standby operation is provided comprising:
   - performing infrared user detection at an interval of a specified time within a first preset time interval and within a preset range, thereby performing the infrared user detection periodically within the first preset time interval within the preset range, when it is detected that no operation instruction exists within a second preset time interval and
   - determining whether a user can be detected within the first preset time interval and performing a standby operation according to a determination result, wherein the performing the standby operation according to the determination result comprises:
      shortening a screen standby timeout period to a third preset time interval when the determination result is no; and
      determining whether an operation instruction exists within the third preset time interval, and if not, entering a standby state.
In a second aspect an apparatus for controlling a standby operation is provided, wherein the apparatus is configured to perform the above method.

The technical solutions provided by the embodiments of the present invention have beneficial effects as follows: user detection is performed within a preset range when no operation instruction exists within a first preset time; a corresponding standby operation is performed according to a result whether a user can be detected; that is, in the present invention, whether a user is using a device within a preset range is considered, and a corresponding standby operation is performed if the user is not using the device, thereby improving user experience. Embodiments which do not fall within the scope of the claims do not describe part of the present invention.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of an embodiment of a method for controlling a standby operation according to Embodiment 1 of the present invention;
FIG. 2 is a flowchart of an embodiment of a method for controlling a standby operation according to Embodiment 2 of the present invention;
FIG. 3 is a flowchart of an embodiment of a method for controlling a standby operation according to Embodiment 3 of the present invention;
FIG. 4 is a first schematic structural diagram of an embodiment of an apparatus for controlling a standby operation according to Embodiment 4 of the present invention;
FIG. 5 is a second schematic structural diagram of an embodiment of an apparatus for controlling a standby operation according to Embodiment 4 of the present invention;
FIG. 6 is a third schematic structural diagram of an embodiment of an apparatus for controlling a standby operation according to Embodiment 4 of the present invention; and
FIG. 7 is a fourth schematic structural diagram of an embodiment of an apparatus for controlling a standby operation according to Embodiment 4 of the present invention.

### DESCRIPTION OF EMBODIMENTS

Embodiments of the present invention provide a method and an apparatus for controlling a standby operation.

To make the objectives, technical solutions, and advantages of the present invention more comprehensible, the following further describes implementation manners of the present invention in detail with reference to the accompanying drawings.

### Embodiment 1

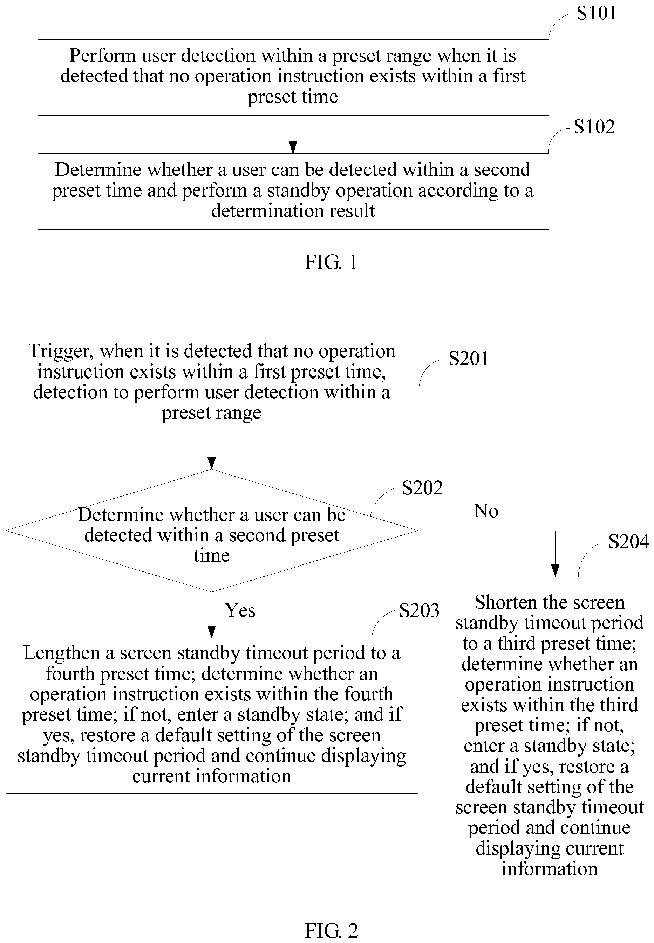

Referring to FIG. 1, FIG. 1 is a flowchart of an embodiment of a method for controlling a standby operation according to Embodiment 1 of the present invention. This embodiment may be executed by a mobile terminal, which may specifically be a tablet computer or a mobile phone, but is not limited thereto. Detailed description is not provided herein.

The method for controlling a standby operation includes:
S101: Perform user detection within a preset range when it is detected that no operation instruction exists within a first preset time.
S102: Determine whether a user can be detected within a second preset time and perform a standby operation according to a determination result.

In this embodiment, user detection is performed within a preset range when no operation instruction exists within a first preset time; a corresponding standby operation is performed according to a result whether a user can be detected; that is, in this embodiment, whether a user is using a device within a preset range is considered, and a corresponding standby operation is performed if the user is not using the device, thereby improving user experience.

### Embodiment 2

Referring to FIG. 2, FIG. 2 is a flowchart of an embodiment of a method for controlling a standby operation according to Embodiment 2 of the present invention. This embodiment may be executed by a mobile terminal, which may specifically be a tablet computer or a mobile phone, but is not limited thereto. A mobile terminal is used as an example for detailed description in the following. An application scenario in this embodiment may be that an operation of browsing information is performed by using a mobile terminal, and may specifically be, but is not limited to, browsing webpage information or short message information.

The method for controlling a standby operation includes:
S201: Trigger, when it is detected that no operation instruction exists within a first preset time, detection to perform user detection within a preset range.

The first preset time involved in this step may be set according to user experience. For example, the first preset time may be 15 seconds.

During browsing of information by using the mobile terminal, if a user does not trigger the mobile terminal within the first preset time, that is, the mobile terminal detects no operation instruction within the first preset time, the mobile terminal triggers detection, which may specifically be infrared detection, but is not limited thereto. Detailed description is not provided herein. Infrared detection may be implemented by using a human body infrared detection device in the mobile terminal, which may specifically be a human body infrared sensor, but is not limited thereto. When being turned on, the human body infrared sensor receives infrared emitted by a human body within the preset range, so as to implement user detection within the preset range. To reduce power consumption of the mobile terminal, preferably, in this embodiment, for the human body infrared sensor in the mobile terminal, a human body infrared sensor of low power consumption may be adopted.

After the mobile terminal triggers infrared detection, user detection is performed within the preset range away from the mobile terminal. Specifically, the human body infrared sensor in the mobile terminal may perform continuous user detection within the preset range. However, to reduce power consumption of the mobile terminal, preferably, the human body infrared sensor in the mobile terminal may perform infrared user detection at an interval of a specified time within the preset range, that is, user detection is performed periodically. The specified time may be set by the user. For example, the human body infrared sensor performs infrared user detection at an interval of 10 seconds within the preset range, that is, the human body infrared sensor is turned on at an interval of 10 seconds to perform user detection.

When the human body infrared sensor is disposed in the mobile terminal, it should be ensured that the human body infrared sensor can detect the user within the preset range in front of the screen of the mobile terminal. The preset range may specifically be a sectorial area within a specified distance in front of the screen of the mobile terminal. The angle of the sectorial area is consistent with a detection angle of the human body infrared sensor. The specified distance is consistent with a maximum detection distance of the human body infrared sensor. For example, the maximum detection distance of the human body infrared sensor is 1.5 meters, and the detection angle is 110°, so the specified range is a sectorial area within 1.5 meters in front of the screen, and the angle of the sectorial area is 110°. The front may be right front, or may also be left front or right front, which is not limited herein.

S202: Determine whether a user can be detected within a second preset time; if yes, execute S203; and if not, execute S204.

The second preset time involved in this step may be set according to user experience. For example, the second preset time may be 2 minutes, but is not limited thereto.

The mobile terminal determines whether the user can be detected within the second preset time, that is, the human body infrared sensor in the mobile terminal determines whether infrared emitted by the user within the preset range can be received within the second preset time, and subsequent corresponding processing is performed according to a determination result.

S203: Lengthen a screen standby timeout period to a fourth preset time; determine whether an operation instruction exists within the fourth preset time; if not, enter a standby state; and if yes, restore a default setting of the screen standby timeout period and continue displaying current information.

The fourth preset time involved in this step may be set according to user experience. For example, when the screen standby timeout period is 1 minute, the fourth preset time may be 10 minutes, but is not limited thereto, that is, in this embodiment, the screen standby timeout period (1 minute) may be lengthened to 10 minutes. The screen standby timeout period may be set by the user in advance, or may also be a factory default setting of a mobile terminal.

When the mobile terminal can detect the user within the second preset time, it indicates that the user is browsing information. The mobile terminal lengthens the screen standby timeout period to the fourth preset time, determines whether an operation instruction exists within the fourth preset time, and performs corresponding processing according to a determination result. Lengthening the screen standby timeout period enables the user to continue browsing information for a longer time while the mobile terminal does not enter a standy state thereby improving user experience.

If no operation instruction exists within the fourth preset time, the mobile terminal enters a standby state. If an operation is performed within the fourth preset time, the default setting of the screen standby timeout period is restored, that is, the fourth preset time is restored to the screen standby timeout period before lengthening. For example, the screen standby timeout period is restored from 10 minutes after lengthening to 1 minute before lengthening, and then displaying of current information continues.

S204: Shorten the screen standby timeout period to a third preset time; determine whether an operation instruction exists within the third preset time; if not, enter a standby state; and if yes, restore a default setting of the screen standby timeout period and continue displaying current information.

The third preset time involved in this step may be set according to user experience. For example, when the screen standby timeout period is 1 minute, the third preset time may be 15 seconds, but is not limited thereto, that is, in this embodiment, the screen standby timeout period (1 minute) may be shortened to 15 seconds. The screen standby timeout period may be set by the user in advance, or may also be a factory default setting of a mobile terminal.

When the mobile terminal fails to detect the user within the second preset time, it indicates that the user has left and is not browsing information. The mobile terminal shortens the screen standby timeout period to the third preset time, determines whether an operation instruction exists within the third preset time, and performs corresponding processing according to a determination result.

Shortening the screen standby timeout period enables the mobile terminal to enter a standby state more quickly, and saves electricity consumption of the mobile terminal. The screen standby timeout period may be set by the user in advance, or may also be a factory default setting of a mobile terminal. For example, the screen standby timeout period is 1 minute, and, in this embodiment, the screen standby timeout period (1 minute) may be shortened to 15 seconds.

If no operation instruction exists within the third preset time, the mobile terminal enters a standby state. If an operation is performed within the third preset time, the default setting of the screen standby timeout period is restored, that is, the third preset time is restored to the screen standby timeout period before shortening. For example, the screen standby timeout period is restored from 15 seconds after shortening to 1 minute before shortening, and displaying of current information continues.

In this embodiment, after the screen standby timeout period is shortened, attribute information of screen display information, such as content and a browsing progress of the display information, at a current time may further be stored in a memory. The attribute information is not limited thereto, and is not further described herein. The attribute information of the screen display information at a current time may be reserved for use in a subsequent procedure.

An application scenario in this embodiment is not limited to information browsing, but may also be other operations performed by using the mobile terminal, which is not specifically limited herein.

This embodiment is not only applicable to a mobile terminal, but may also be applicable to various multimedia terminals, whose implementation principle and procedure are similar to those of the mobile terminal, which are not described herein.

In this embodiment, user detection is performed within a preset range when no operation instruction exists within a first preset time; a corresponding standby operation is performed according to a result whether a user can be detected; that is, in this embodiment, whether a user is using a device within a preset range is considered, and a corresponding standby operation is performed if the user is not using the device, thereby improving user experience.

In addition, in this embodiment, electricity consumption of the mobile terminal is saved and the mobile terminal becomes more intelligent.

### Embodiment 3

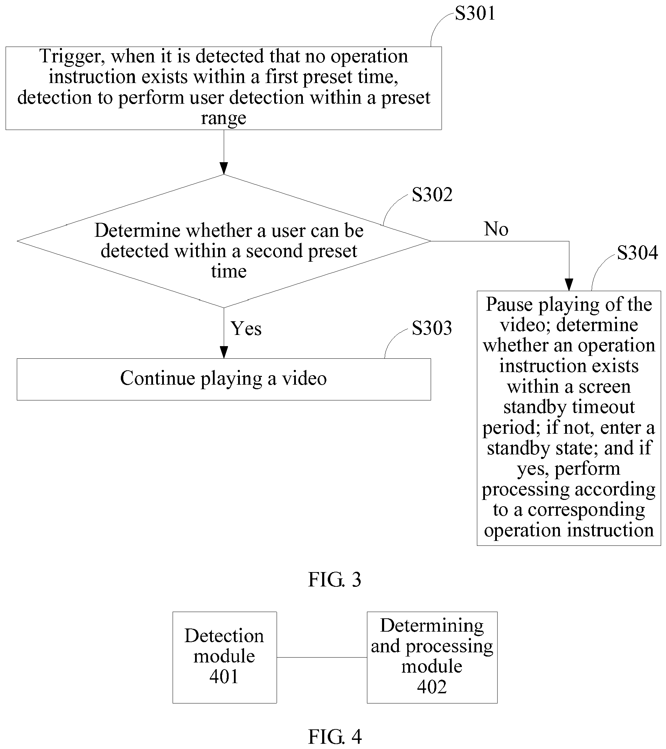

Referring to FIG. 3, FIG. 3 is a flowchart of an embodiment of a method for controlling a standby operation according to Embodiment 3 of the present invention. This embodiment may be executed by a mobile terminal, which may specifically be a tablet computer or a mobile phone, but is not limited thereto. A mobile terminal is used as an example for detailed description in the following. An application scenario in this embodiment is that an operation of playing a video is performed by using the mobile terminal.

The method for controlling a standby operation includes:
S301: Trigger, when it is detected that no operation instruction exists within a first preset time, detection to perform user detection within a preset range.

The first preset time involved in this step may be set according to user experience. For example, the first preset time may be 5 minutes.

When the video is being played on the mobile terminal, if a user does not trigger the mobile terminal within the first preset time, that is, the mobile terminal detects no operation instruction within the first preset time, the mobile terminal triggers detection, which may specifically be infrared detection, but is not limited thereto. Detailed description is not provided herein. Infrared detection may be implemented by using a human body infrared detection device in the mobile terminal, which may specifically be a human body infrared sensor, but is not limited thereto. When being turned on, the human body infrared sensor receives infrared emitted by a human body within the preset range, so as to implement user detection within the preset range. To reduce power consumption of the mobile terminal, preferably, in this embodiment, for the human body infrared sensor in the mobile terminal, a human body infrared sensor of low power consumption is adopted.

After the mobile terminal triggers infrared detection, user detection is performed within the preset range away from the mobile terminal. Specifically, the human body infrared sensor in the mobile terminal may perform continuous user detection within the preset range. However, to reduce power consumption of the mobile terminal, preferably, the human body infrared sensor in the mobile terminal may perform infrared user detection at an interval of a specified time within the preset range, that is, user detection is performed periodically. The specified time may be set by the user. For example, the human body infrared sensor performs infrared user detection at an interval of 10 seconds within the preset range, that is, the human body infrared sensor is turned on at an interval of 10 seconds to perform user detection.

When the human body infrared sensor is disposed in the mobile terminal, it should be ensured that the human body infrared sensor can detect the user within the preset range in front of the screen of the mobile terminal. The preset range may specifically be a sectorial area within a specified distance in front of the screen of the mobile terminal. The angle of the sectorial area is consistent with a detection angle of the human body infrared sensor. The specified distance is consistent with a maximum detection distance of the human body infrared sensor. For example, the maximum detection distance of the human body infrared sensor is 1.5 meters, and the detection angle is 110°, so the specified range is a sectorial area within 1.5 meters in front of the screen, and the angle of the sectorial area is 110°. The front may be right front, or may also be left front or right front, which is not limited herein.

S302: Determine whether a user can be detected within a second preset time; if yes, execute S303; and if not, execute S304.

The second preset time involved in this step may be set according to user experience, for example, the second preset time may be 2 minutes, but is not limited thereto.

The mobile terminal determines whether the user can be detected within the second preset time, that is, the human body infrared sensor in the mobile terminal determines whether infrared emitted by the user within the preset range can be received within the second preset time, and subsequent corresponding processing is performed according to a determination result.

S303: Continue playing the video.

If a system of the mobile terminal is an Android system, the mobile terminal does not enter a standby state automatically in a process of normal video playing. If the mobile terminal detects the user within the second preset time, it indicates that the user is watching the video, and the mobile terminal continues playing the video normally.

However, for a Windows system, the mobile terminal enters a standby state if the mobile terminal is not triggered within a screen standby timeout period. Therefore, for a mobile terminal provided with a Windows system, when the mobile terminal can detect a user within the second preset time, the screen standby timeout period may be lengthened to a third preset time, and it is determined whether an operation instruction exists within the third preset time. If yes, the mobile terminal continues playing the video normally; and if not, the mobile terminal enters a standby state, thereby improving user experience. The screen standby timeout period may be set by the user in advance, or may also be a factory default setting of a compute. For example, the screen standby timeout period is 1 minute or 2 minutes.

S304: Pause playing of the video; determine whether an operation instruction exists within the screen standby timeout period; if not, enter a standby state; and if yes, perform processing according to a corresponding operation instruction.

In this step, when the mobile terminal fails to detect the user within the second preset time, it indicates that the user has left and is not watching the video. The video is paused then, and it is determined whether an operation instruction exists within the screen standby timeout period. If not, the mobile terminal enters a standby state; and if yes, processing is performed according to a corresponding operation instruction.

In this embodiment, after the playing of the video is paused, attribute information such as a time progress and decoding processing information of the video at a current time may further be stored in a memory. The attribute information is not limited thereto, and is not further described herein. The attribute information of the video may be reserved for use in a subsequent procedure.

The operation of pausing the playing of a video and entering a standby state not only improves user experience, but also saves electricity consumption.

This embodiment is not only applicable to a mobile terminal, but may also be applicable to various multimedia terminals, whose implementation principle and procedure are similar to those of the mobile terminal. Detailed description is not provided herein.

In this embodiment, user detection is performed within a preset range when no operation instruction exists within a first preset time; a corresponding standby operation is performed according to a result whether a user can be detected; that is, in this embodiment, whether a user is using a device within a preset range is considered, and a corresponding standby operation is performed if the user is not using the device, thereby improving user experience.

In addition, in this embodiment, electricity consumption of the mobile terminal is saved and the mobile terminal becomes more intelligent.

### Embodiment 4

Referring to FIG. 4, FIG. 4 is a first schematic structural diagram of an embodiment of an apparatus for controlling a standby operation according to Embodiment 4 of the present invention. In this embodiment, the apparatus for controlling a standby operation may be a mobile terminal, which may specifically be a tablet computer or a mobile phone, but is not limited thereto. Detailed description is not provided herein.

The apparatus for controlling a standby operation includes:
a detection module 401, configured to perform user detection within a preset range when it is detected that no operation instruction exists within a first preset time; and
a determining and processing module 402, configured to determine whether a user can be detected within a second preset time and perform a standby operation according to a determination result.

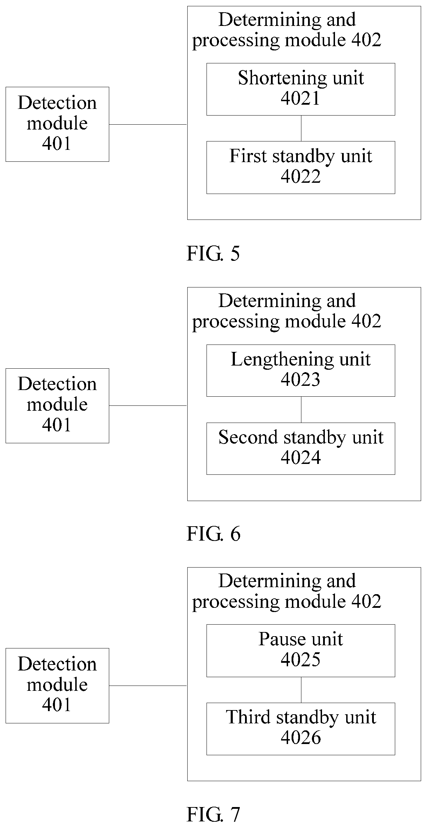

The determining and processing module 402 includes: a shortening unit 4021 and a first standby unit 4022. As shown in FIG. 5, FIG. 5 is a second schematic structural diagram of an embodiment of the apparatus for controlling a standby operation according to Embodiment 4 of the present invention.

The shortening unit 4021 is configured to shorten a screen standby timeout period to a third preset time when the determination result is no.

The first standby unit 4022 is configured to determine whether an operation instruction exists within the third preset time, and if not, enter a standby state.

In another implementation manner of this embodiment, the determining and processing module 402 includes: a lengthening unit 4023 and a second standby unit 4024. As shown in FIG. 6, FIG. 6 is a third schematic structural diagram of an embodiment of the apparatus for controlling a standby operation according to Embodiment 4 of the present invention.

The lengthening unit 4023 is configured to lengthen a screen standby timeout period to a fourth preset time when the determination result is yes.

The second standby unit 4024 is configured to determine whether an operation instruction exists within the fourth preset time, and if not, enter a standby state.

In another implementation manner of this embodiment, the determining and processing module 402 includes: a pause unit 4025 and a third standby unit 4026. As shown in FIG. 7, FIG. 7 is a fourth schematic structural diagram of an embodiment of the apparatus for controlling a standby operation according to Embodiment 4 of the present invention.

The pause unit 4025 is configured to: when the determination result is no and a video is being played, pause the playing of the video.

The third standby unit 4026 is configured to determine whether an operation instruction exists within a screen standby timeout period, and if not, enter a standby state.

Based on the foregoing implementation manner, the detection module 401 includes:
a detection unit, configured to perform infrared user detection at an interval of a specified time within the preset range.

In this embodiment, the detection module 401 may be a human body infrared detection device such as a human body infrared sensor.

In this embodiment, an apparatus for controlling a standby operation performs user detection within a preset range when no operation instruction exists within a first preset time; and performs a corresponding standby operation according to a result whether a user can be detected; that is, in this embodiment, whether a user is using a device within a preset range is considered, and a corresponding standby operation is performed if the user is not using the device, thereby improving user experience.

In addition, in this embodiment, electricity consumption of the apparatus for controlling a standby operation is saved and the apparatus for controlling a standby operation becomes more intelligent.

It should be noted that all embodiments in the present invention are described in a progressive manner. Each embodiment describes only differences from other embodiments. For same or similar parts among the embodiments, mutual reference may be made. For the apparatus embodiments, functions of modules in the apparatus are basically similar to description of steps in the method embodiments, and are therefore only briefly described. For associated content, reference may be made to related description in the method embodiments.

It should be noted that the relational terms herein such as first and second are used only to differentiate an entity or operation from another entity or operation, and do not require or imply any actual relationship or sequence between these entities or operations. Moreover, the terms "include", "comprise", or any variation thereof are intended to cover a non-exclusive inclusion. Therefore, in the context of a process, method, object, or device that includes a series of elements, the process, method, object, or device not only includes such elements, but also includes other elements not specified explicitly, or may also include inherent elements of the process, method, object, or device. With no more limitations, an element limited by "include a/an..." does not exclude other same elements existing in the process, the method, the article, or the device which includes the element.

A person of ordinary skill in the art may understand that all or a part of the steps of the embodiments may be implemented by hardware or a program instructing relevant hardware. The program may be stored in a computer readable storage medium. The storage medium may include: a read-only memory, a magnetic disk, or an optical disc.

## Claims

1. A method for controlling a standby operation comprising:
• performing infrared user detection at an interval of a specified time within a first preset time interval and within a preset range, thereby performing the infrared user detection periodically within the first preset time interval within the preset range, when it is detected that no operation instruction exists within a second preset time interval (S201); and
• determining whether a user can be detected within the first preset time interval and performing a standby operation according to a determination result (S202),
wherein the performing the standby operation according to the determination result comprises:
shortening a screen standby timeout period to a third preset time interval when the determination result is no; and
determining whether an operation instruction exists within the third preset time interval, and if not, entering a standby state (S204).

2. An apparatus for controlling a standby operation, wherein the apparatus is configured to perform the method according to claim 1.

## Patentansprüche

1. Verfahren zur Steuerung eines Standby-Betriebs, umfassend:
Durchführen einer Infrarot-Benutzerdetektion mit einem Intervall einer spezifizierten Zeit innerhalb eines ersten voreingestellten Zeitintervalls und innerhalb eines voreingestellten Bereichs, wodurch die Infrarot-Benutzerdetektion periodisch innerhalb des ersten voreingestellten Zeitintervalls innerhalb des voreingestellten Bereichs durchgeführt wird, wenn detektiert wird, dass keine Betriebsanweisung innerhalb eines zweiten voreingestellten Zeitintervalls vorhanden ist (S201); und
Bestimmen, ob ein Benutzer innerhalb des ersten voreingestellten Zeitintervalls detektiert werden kann, und Durchführen eines Standby-Betriebs gemäß einem Bestimmungsergebnis (S202),
wobei das Durchführen des Standby-Betriebs gemäß dem Bestimmungsergebnis Folgendes umfasst:
Verkürzen einer Bildschirm-Standby-Timeout-Periode zu einem dritten voreingestellten Zeitintervall, wenn das Bestimmungsergebnis Nein lautet; und
Bestimmen, ob eine Betriebsanweisung in dem dritten voreingestellten Zeitintervall vorhanden ist, und falls dem nicht so ist, Eintreten in einen Standby-Zustand (S204).

2. Vorrichtung zur Steuerung eines Standby-Betriebs, wobei die Vorrichtung dazu ausgelegt ist, das Verfahren nach Anspruch 1 durchzuführen.

## Revendications

1. Procédé de commande d'une opération de mise en veille comprenant :
la réalisation d'une détection d'utilisateur infrarouge à un intervalle de temps spécifié dans un premier intervalle de temps prédéfini et dans une plage prédéfinie, réalisant ainsi la détection d'utilisateur infrarouge périodiquement dans le premier intervalle de temps prédéfini dans la plage prédéfinie, lorsqu'il est détecté qu'aucune instruction de fonctionnement n'existe dans un deuxième intervalle de temps prédéfini (S201) ; et
la détermination si un utilisateur peut être détecté dans le premier intervalle de temps prédéfini et la réalisation d'une opération de veille en fonction d'un résultat de détermination (S202),
la réalisation de l'opération de mise en veille conformément au résultat de la détermination comprenant :
le raccourcissement du délai d'attente de l'écran à un troisième intervalle de temps prédéfini lorsque le résultat de la détermination est non ; et
la détermination si une instruction d'opération existe dans le troisième intervalle de temps prédéfini et, sinon, entrer dans un état de mise en veille (S204).

2. Appareil pour commander une opération de veille, l'appareil étant configuré pour réaliser le procédé selon la revendication 1.
